# FASCICULE DE BREVET EUROPEEN

(11) **EP 2 607 190 B1**
(45) Date de publication et mention de la délivrance du brevet: **20.05.2015**
(21) Numéro de dépôt: 12196971.1
(22) Date de dépôt: 13.12.2012
(51) Int. Cl.: B60S 1/48, B60S 1/38

(54) **Interface hydraulique chauffante pour un système d'approvisionnement et/ou de distribution en liquide lave glace de véhicule automobile**
geheizte hydraulische Kupplung für ein fahrzeug wischflüssigkeitszufuhr- und/oder ausgabe-system.
heated hydraulic interface for a vehicle windshield washing liquid distribution and/or supply system.

(30) Priorité: 19.12.2011 FR 1161934
(43) Date de publication de la demande: 26.06.2013
(73) Titulaire: Valeo Systèmes d'Essuyage, 78321 Le Mesnil Saint Denis (FR)
(72) Inventeur: Cros, Lionel, 63670 LA ROCHE BLANCHE (FR)
(74) Mandataire: Callu Danseux, Violaine

(56) Documents cités:
- WO-A1-2010/034447
- WO-A1-2011/032679
- DE-A1-102009 048 212
- DE-A1-102010 007 557

## Description

Le secteur technique de la présente invention est celui des systèmes d'approvisionnement et/ou de distribution en liquide lave glace pour véhicule automobile, et plus particulièrement des interfaces hydrauliques installées entre un tube d'amenée du liquide de lavage et un connecteur du dispositif d'essuyage. Un tel système accompagne une installation d'essuyage des vitres du véhicule.

Les automobiles sont couramment équipées d'installation d'essuyage et de système de lavage pour assurer un essuyage et un lavage du pare-brise et éviter que la vision qu'a le conducteur de son environnement soit perturbée. Ces installations d'essuyage comprennent des bras effectuant un mouvement de va-et-vient angulaire au bout desquels sont installés des balais allongés, porteurs eux-mêmes de lames racleuses réalisées en une matière élastique. Ces lames frottent contre le pare-brise et évacuent l'eau en l'amenant en dehors du champ de vision du conducteur. Le balai est rattaché au bras tournant de l'essuie-glace par un ensemble constitué d'un connecteur mécanique et d'un adaptateur. L'adaptateur est une pièce qui est fixée directement sur la structure du balai, le connecteur étant une pièce intermédiaire qui permet la fixation de l'adaptateur sur le bras de l'essuie-glace. Ces deux pièces sont reliées l'une à l'autre par un axe transversal qui autorise leur rotation relative.

Les systèmes de lavage comprennent un dispositif d'amenée d'un liquide lave-vitre qui est acheminé depuis un réservoir situé dans le véhicule et qui est projeté en direction du pare-brise par des gicleurs situés généralement sur le capot, sur la grille de baie de pare-brise ou sur l'essuie-glace lui-même, pour une meilleure distribution du liquide. Dans le cas de gicleurs placés sur les balais, le liquide lave-vitre est acheminé par des canalisations qui sont fixées sur le bras de l'essuie-glace et qui sont raccordées à un système de distribution du liquide au niveau du connecteur. Le connecteur comporte ainsi des orifices aptes à recevoir, par une liaison étanche, un élément de raccordement des canalisations sur le connecteur.

Lorsque la température du liquide lave-glace est trop basse, par exemple en-dessous de 5°C, on chauffe le liquide lave-glace. Pour cela, une conduite de transport réchauffe le liquide lave-glace prélevé dans un réservoir par une pompe au moment où l'on actionne la commande du lave-glace, généralement par le levier de commande placé à côté du volant et contrôlant entre autre l'actionnement des essuie-glaces.

L'élément de raccordement installé entre la canalisation et le connecteur n'est pas chauffé. Il est donc susceptible de former une zone froide, où le liquide de lavage gèle. Cette situation est gênante car ce gel, en des endroits discrets et difficiles d'accès du système d'approvisionnement et/ou de distribution de liquide, peut rendre la fonction de lavage totalement indisponible, bien que le reste du système puisse être chauffé.

Le document WO2011/032679 propose une solution à ce problème en installant un moyen de chauffage électrique dans l'élément de raccordement. Or, la disposition de ce moyen de chauffage ne résout pas le problème technique de manière satisfaisante. En effet, la distance qui sépare le moyen de chauffage des conduits à dégeler est relativement importante, si bien que le temps nécessaire pour dégeler les canaux de l'élément de raccordement n'est pas compatible avec le niveau de service attendu par un utilisateur du véhicule, notamment quand celui-ci est un véhicule haut de gamme. Ceci représente un premier inconvénient.

Par ailleurs, la disposition ponctuelle du moyen de chauffage implique une puissance électrique importante pour réussir à dégeler les canaux. Une telle puissance est problématique car elle implique un réseau électrique dimensionné pour une telle puissance. Ceci forme un deuxième inconvénient.

Enfin, le moyen de chauffage est noyé dans l'élément de raccordement, ce qui complique la fabrication de ce dernier.

Document DE 102010007557 A montre un interface hydraulique tel que décrit dans le préambule de la revendication 1.

L'invention se propose d'améliorer la situation.

Le but de la présente invention est donc de résoudre les inconvénients décrits ci-dessus principalement en disposant, notamment en collant, le moyen de chauffage directement sur une face externe de l'élément de raccordement. La fabrication et l'assemblage de l'interface sont ainsi facilités.

L'invention a donc pour objet une interface hydraulique apte à être installée entre un tube d'alimentation en liquide, notamment de lavage, et un connecteur d'un dispositif d'essuyage d'une vitre d'un véhicule, comprenant au moins une première portion apte à canaliser le liquide et un moyen de chauffage apte à être alimenté électriquement, **caractérisée en ce que** le moyen de chauffage est solidarisé au moins sur une face extérieure de la première portion. Une telle solution permet d'agrandir notablement la surface d'échange thermique entre le moyen chauffant et l'interface hydraulique, tout en rapprochant le moyen chauffant au plus près de la zone dans laquelle le liquide circule, ce qui permet de le dégeler plus rapidement que le dispositif de l'art antérieur. Le fait d'installer le moyen de chauffage sur la face extérieure facilite sa pose puisqu'il suffit de le solidariser contre la face extérieure.

Selon une variante, une cavité est ménagée dans la face extérieure, le moyen de chauffage étant disposé dans ladite cavité. Une telle cavité permet de loger le moyen de chauffage dans le périmètre global de la première portion, ce qui limite tout risque d'endommager du moyen de chauffage lors d'un frottement de la première portion, notamment au moment du remplacement du balai d'essuyage.

Dans un tel cas, la cavité est délimitée par un fond plat sur lequel le moyen de chauffage adhère. Le caractère plat du fond facilite la pose et l'adhérence du moyen de chauffage.

Avantageusement, la première portion s'étend selon une direction longitudinale correspondant à une direction le long de laquelle le liquide est apte à se déplacer dans la première portion, ledit moyen de chauffage s'étendant selon un axe longitudinal parallèle à la direction longitudinale. On garantit ainsi que le moyen de chauffage s'étend sur la longueur de la portion porteuse de ce moyen de chauffage, de manière à limiter les zones non chauffées.

De manière préférentielle, l'interface hydraulique comprend une deuxième portion apte à canaliser le liquide séparée, c'est-à-dire adjacente et distincte, de la première portion et reliée à cette dernière par un premier pont, le moyen de chauffage étant disposé à la fois sur la première portion et sur la deuxième portion. Ainsi, quand l'interface hydraulique comprend une pluralité de conduits, il est possible de chauffer ces conduits par un unique moyen de chauffage.

Dans cette variante, le moyen de chauffage chemine sur le pont. On assure ainsi le lien entre un premier moyen de chauffage disposée sur la première portion avec un deuxième moyen de chauffage disposé sur la deuxième portion, adjacente à la première portion mais séparée de celle-ci au moins par le premier pont.

Selon un exemple de réalisation, le moyen de chauffage comprend au moins deux segments parallèles disposés sur chaque portion apte à canaliser le liquide. Une telle solution augmente le cheminement de la piste sur une même portion et augmente corrélativement la surface d'échange entre l'interface hydraulique et le moyen de chauffage.

Selon un autre exemple de réalisation, le moyen de chauffage comprend un premier segment cheminant sur la première portion et un deuxième segment cheminant sur la deuxième portion, lesdites extrémités du premier segment et du deuxième segment s'étendant jusqu'au droit du premier pont et étant relié entre elles par un troisième segment cheminant sur ledit premier pont. Une telle solution présente l'avantage d'être simple à mettre en oeuvre.

Le moyen de chauffage est de préférence une piste résistive et comprend aux moins deux points de connexion électrique destinés à être raccordés à une source électrique.

De manière complémentaire, il est prévu un deuxième pont reliant la première portion à la deuxième portion, lesdits points de connexion étant alors disposés sur le deuxième pont. Le deuxième pont sert ainsi de support pour recevoir les points de connexion et présente l'avantage d'être disposé à proximité du tube d'alimentation, d'où débouche les câbles qui fournissent l'énergie électrique nécessaire à l'activation du moyen de chauffage.

En variante, le moyen de chauffage comprend au moins un câble d'alimentation électrique solidaire du tube d'alimentation. Une telle solution évite l'utilisation de points de connexion servant à relier les câbles issus du tube d'alimentation et les moyens de chauffage de l'interface hydraulique.

De manière optionnelle, l'interface hydraulique selon l'invention comprend un moyen de solidarisation destiné à maintenir mécaniquement l'interface hydraulique sur le connecteur.

Le moyen de chauffage peut également comprendre une piste résistive et un adhésif reliant la piste résistive à la portion apte à canaliser le liquide. Il s'agit ici d'une solution simple à mettre en oeuvre pour solidariser le moyen de chauffage sur la face extérieure d'une portion dans laquelle le liquide de lavage est destiné à circuler.

L'invention couvre aussi un système d'approvisionnement et/ou de distribution en liquide d'une installation d'essuyage pour véhicule automobile, comprenant au moins un tube d'alimentation en liquide, une source d'énergie électrique du moyen de chauffage et une interface comprenant l'une quelconque des caractéristiques présentées ci-dessus.

Avantageusement, le moyen de chauffage comprend aux moins deux points de connexion électrique, chaque câble étant solidarisé sur un point de connexion électrique raccordé à un câble d'alimentation électrique.

Dans une telle configuration, au moins un point de connexion est couvert par un dispositif de protection. On évite ainsi que le raccordement entre le câble et le point de connexion soit endommagé, notamment par arrachement ou par corrosion. Un tel dispositif de protection assure également une étanchéité qui empêche la pénétration d'eau au niveau du contact électrique entre le câble et le point de connexion considéré.

Selon un exemple de réalisation, le dispositif de protection est un plot en contact avec le point de connexion électrique et qui recouvre une extrémité du brin conducteur du câble solidarisé au point de connexion électrique.

En variante, le moyen de chauffage de l'interface hydraulique peut comprendre au moins un câble d'alimentation électrique solidaire du tube d'alimentation.

D'autres caractéristiques, détails et avantages de l'invention ressortiront plus clairement à la lecture de la description donnée ci-après à titre indicatif en relation avec des dessins dans lesquels :
- la figure 1 est une vue générale, en perspective, d'un dispositif d'essuyage pour véhicule automobile,
- la figure 2 est une vue de détail de la figure 1,
- la figure 3 est une vue en perspective d'une interface hydraulique selon l'invention,
- la figure 4 est une vue schématique montrant le cheminement d'un moyen de chauffage sur l'interface hydraulique selon l'invention,
- la figure 5 est une vue schématique montrant le cheminement d'un moyen de chauffage sur l'interface hydraulique selon une variante de réalisation.

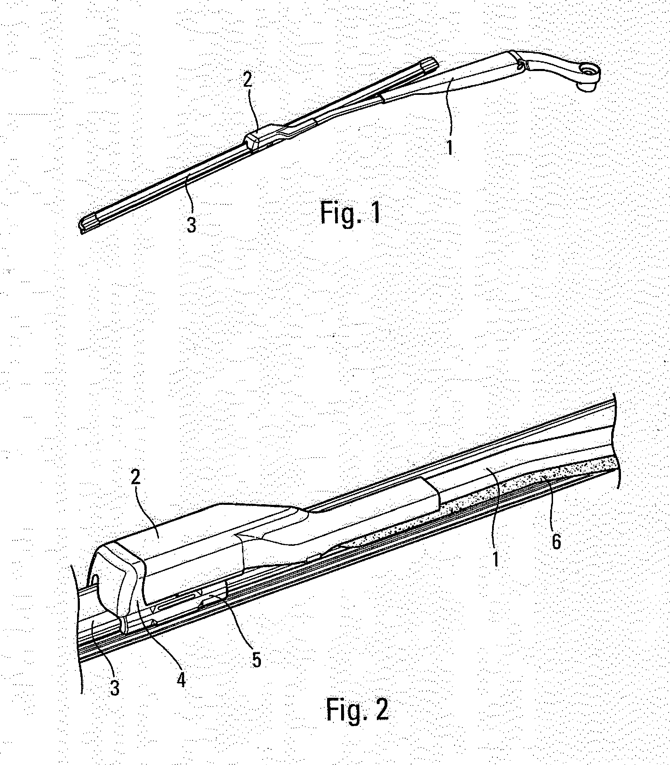

En se référant aux figures 1 et 2, on voit un dispositif d'essuyage pour une vitre d'un véhicule automobile, autrement appelé essuie-glace, composé d'un porte-balai ou bras 1 se terminant à son extrémité externe par une chape 2, qui est fixée, notamment, par sertissage sur le bras 1. De manière alternative, cette chape peut également être formée à l'extrémité de bras par déformation de cette dernière et constituer un ensemble unitaire avec le bras. Ce dernier a pour fonction, par l'intermédiaire d'un adaptateur 5 et d'un connecteur 4, de supporter un balai d'essuyage 3.

L'adaptateur 5 est serti sur le balai d'essuyage 3 et assure une transmission des efforts vers le balai, alors que le connecteur 4 est une pièce intermédiaire assurant, d'une part une compatibilité entre différentes formes de chape et un même balai d'essuyage, et d'autre part le transport et la distribution du liquide de lavage vers le balai d'essuyage.

Un tube d'alimentation 6 en liquide de lavage longe le bras 1 jusqu'au connecteur 4. Selon une première variante de l'invention, un tel tube d'alimentation comprend un unique conduit d'amenée du liquide de lavage. Selon une autre variante de l'invention, le tube d'alimentation 6 comprend une pluralité de conduits, notamment deux, séparés les uns des autres par le matériau constitutif du tube d'alimentation.

Une telle configuration est particulièrement adaptée au cas où le dispositif d'essuyage comprend un balai d'essuyage 3 équipé de rampes de projection qui s'étendent selon un axe longitudinal définissant la longueur du balai d'essuyage.

Selon l'invention, le connecteur 4 peut également assurer le transport d'une énergie électrique destinée à alimenter un dispositif de chauffage intégré au balai d'essuyage 3.

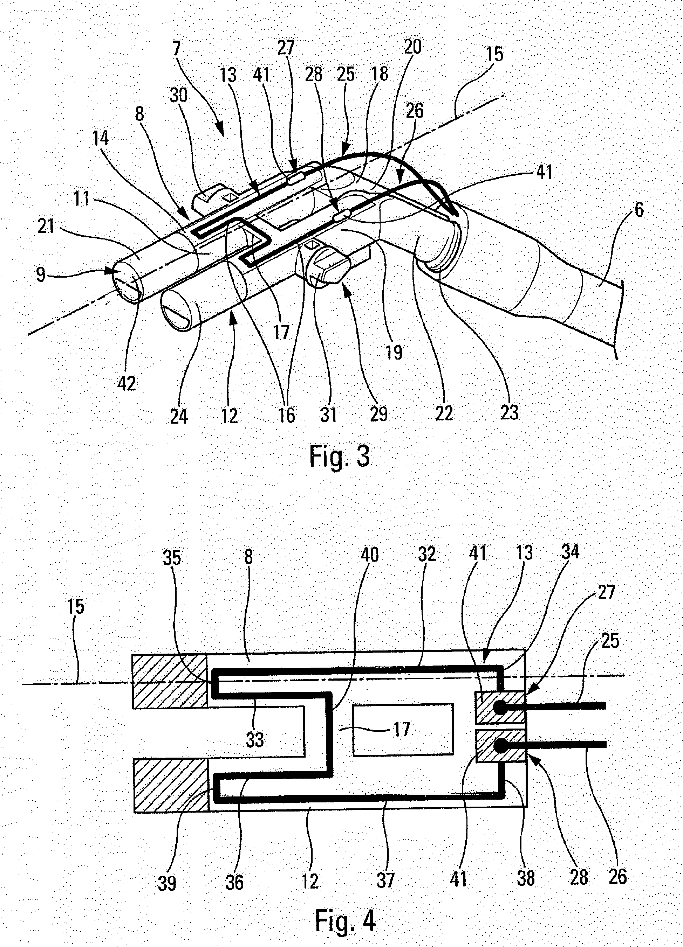

Le tube d'alimentation 6 est raccordé au moins mécaniquement et hydrauliquement au connecteur 4 par une interface hydraulique 7 selon l'invention, visible à la figure 3. Cette interface a pour fonction notamment de faciliter l'amovibilité du tube d'alimentation vis-à-vis du connecteur, lors d'un remplacement du balai d'essuyage en raison de son usure, par exemple.

L'interface 7 est hydraulique en ce sens qu'elle canalise le liquide lavage entre le tube d'alimentation 6 et le connecteur 4. Pour ce faire, l'interface hydraulique 7 comprend une première portion 8 apte à contenir le liquide de lavage. Une telle première portion prend la forme d'une tubulure de section globalement circulaire. On notera que selon une variante, la section interne de cette première portion peut être une combinaison d'un arc de cercle et d'un plat, le plat permettant de ménager une zone 42 dans laquelle est ménagée une cavité, comme on le détaillera ci-après.

Cette première portion 8 est délimitée par une paroi 9 qui présente une face intérieure en contact avec le liquide de lavage, et une face extérieure 11 en contact avec l'air environnant l'interface hydraulique 7.

L'interface hydraulique 7 comprend une deuxième portion 12 de structure identique à la première portion 8. Les explications données ci-dessous en rapport avec la première portion sont transposables à la deuxième portion.

Selon l'invention, l'interface hydraulique 7 porte un moyen de chauffage 13 dont la fonction est de transformer le courant électrique qui le traverse en calories à dissiper au niveau de la première portion. Ce moyen de chauffage est solidarisé, c'est-à-dire solidement fixé, contre la face extérieure de la première portion. A titre d'exemple, le moyen de chauffage 13 peut être collé contre la face extérieure 11. De manière complémentaire, un tel collage peut intervenir au moyen d'une bande adhésive interposée entre le moyen de chauffage 13 et la face extérieure 11 de la première portion.

De manière avantageuse, la première portion 8 comprend une cavité 14 dans laquelle le moyen de chauffage 13 s'étend. Une telle cavité 14 est une déformation de la face extérieure 11 en direction de la face intérieure de la première portion 8, afin de former une zone plate, autrement appelée fond plat, sur laquelle le moyen de chauffage est solidarisé. En d'autres termes et à titre d'exemple, il est ménagé sur toute la longueur de la face extérieure 11 un méplat contre lequel le moyen de chauffage est plaqué.

La première portion 8 est une canalisation qui s'étend selon une longueur définie par la direction empruntée par le liquide quand il traverse la première portion. Cette longueur forme une direction longitudinale illustrée par la référence 15 sur la figure 3. Le moyen de chauffage 13 forme une bande rectangulaire qui s'étend selon un axe longitudinal qui délimite sa longueur, un tel axe est alors avantageusement parallèle à la direction longitudinale 15 que suit la première portion 8.

L'interface hydraulique 7 selon l'invention comprend encore une troisième portion 20 apte à canaliser le liquide de lavage et raccordée à la première portion 8. Cette troisième portion 20 est installée de manière à former un angle non-nul avec la direction longitudinale 15 le long de laquelle la première portion 8 s'étend. Une extrémité libre de cette troisième portion 20 est logée à l'intérieur d'un des conduits formés dans le tube d'alimentation 6, une face frontale du tube venant alors buter contre une collerette réalisée sur la face extérieure de la troisième portion 20. On notera aussi que la première portion 8 présente une extrémité 21 de section exterieure circulaire, destinée à entrer dans le connecteur du dispositif d'essuyage. Comme la première portion 8, la deuxième portion 12 est également raccordée à une quatrième portion 22 qui présente une collerette 23 formant butée à l'encontre d'une translation du tube d'alimentation 6 sur la troisième et/ou la quatrième portion. Cette deuxième portion 12 comporte encore une extrémité 24 destinée à pénétrer dans le connecteur du dispositif d'essuyage.

Le moyen de chauffage 13 peut par exemple être formé d'une piste résistive 16 qui chemine sur la première portion. Selon une variante non représentée, l'interface comprend un moyen de chauffage dédié à chaque portion de l'interface, ces moyens de chauffage pouvant alors être indépendants l'un de l'autre. La variante de la figure 3 montre un unique moyen de chauffage qui chemine à la fois sur la première portion 8 et sur la deuxième portion 12.

Le moyen de chauffage 13 est avantageusement formé par une feuille souple sur une face de laquelle la piste résistive est fixée, l'autre face de la feuille recevant un adhésif pour faire adhérer le moyen de chauffage sur la portion concernée de l'interface hydraulique 7.

La deuxième portion 12 est reliée mécaniquement à la première portion 8 par au moins un premier pont 17. Ce premier pont est une zone de longueur inférieure à la longueur de la première ou de la deuxième portion 8 et 12. Autrement dit, il existe un vide entre la première portion 8 et la deuxième portion 12 de part et d'autre du premier pont 17.

Les deux portions 8 et 12 aptes à canaliser le liquide de lavage sont encore reliées l'une à l'autre par un deuxième pont 18 ménagé à une même extrémité de la première portion 8 et de la deuxième portion 12, ici située à proximité de la troisième portion 20 et la quatrième portion 22. Le deuxième pont 18 est ainsi séparé du premier pont 17 par un vide, autrement appelé espace, qui s'étend entre ces deux ponts et entre ces deux portions aptes à canaliser le liquide de lavage.

Selon un mode de réalisation de l'invention, le moyen de chauffage 13 est disposé à la fois sur la première portion 8 et sur la deuxième portion 12. Dans un tel cas, il s'agit d'un même moyen de chauffage. La piste résistive chemine alors sur la face extérieure 11 de la première portion 8, puis sur une face extérieure du premier pont 17, puis sur une face extérieure 19 de la deuxième portion 12.

Le moyen de chauffage 13 est raccordé à une source d'énergie électrique qui prend, par exemple, la forme de deux câbles 25 et 26. Le raccordement électrique entre ces deux câbles et le moyen de chauffage est opéré au niveau de deux points de connexion électrique, référencés 27 et 28. Selon un exemple de réalisation non représenté, les deux points de connexion peuvent être disposés sur une même portion, première ou deuxième portions de l'interface hydraulique, apte à canaliser le liquide de lavage. C'est notamment le cas lorsqu'il est prévu un moyen de chauffage dédié à une unique portion.

Dans l'exemple de la figure 3, un premier point de connexion 27 est disposé sur la première portion 8 alors qu'un deuxième point de connexion 28 est disposé sur la deuxième portion 12. Dans un tel cas, la piste résistive chemine depuis le premier point de connexion 27 sur la première portion 8, sur le premier pont 17, sur la deuxième portion 12 pour rejoindre le deuxième point de connexion 28.

Avantageusement, le premier point de connexion 27 et le deuxième point de connexion 28 peuvent être placés sur le deuxième pont 18, ce dernier formant une zone facilitant le raccordement des câbles sur les points de connexion, tout en étant proche du tube d'alimentation 6 duquel débouche les câbles 25 et 26. Il s'agit cependant d'un exemple de réalisation et l'invention couvre le cas où les points de connexion sont disposés sur la piste résistive en un autre endroit que le deuxième pont, comme par exemple le premier pont 17.

Chacun des câbles comprend une gaine électriquement isolante qui entoure un brin conducteur. Ce dernier est raccordé à chaque point de connexion, par exemple par soudage. Le matériau avec lequel est fabriquée la piste résistive 16 est par exemple du cuivre, ou encore un alliage d'aluminium.

L'interface hydraulique 7 comprend encore un moyen de solidarisation 29 apte à maintenir mécaniquement l'interface hydraulique 7 sur le connecteur du dispositif d'essuyage. Ce moyen de solidarisation 29 prend la forme de deux excroissances qui s'étendent selon des axes perpendiculaires à la direction longitudinale 15 de la première portion 8. Une première excroissance 30 débouche de la première portion 8 alors qu'une deuxième excroissance 31 débouche de la deuxième portion 12.

De manière optionnelle, l'interface hydraulique peut aussi comprendre un dispositif de réception (non représenté) d'un connecteur électrique destiné à alimenter un élément chauffant intégré au balai d'essuyage. Par exemple, un tel dispositif de réception peut prendre la forme d'un rail ou d'une nervure solidarisé sur le premier pont 17 et/ou sur le deuxième pont 18. Il peut également s'agir d'une hanse en forme de « U » dont les branches sont issues de la première portion 8 et de la deuxième portion 12.

La figure 4 illustre le cheminement particulier de la piste résistive 16 formant un exemple de réalisation du moyen de chauffage 13. La piste résistive 16 comprend au moins deux segments parallèles disposés sur chaque portion apte à canaliser le liquide, c'est-à-dire la première portion 8 et/ou la deuxième portion 12. Un premier couple de segments parallèles disposés sur la première portion 8 est formé par un premier segment 32 et un deuxième segment 33 qui s'étendent chacun selon un axe parallèle à la direction longitudinale 15. Un autre couple de segments, s'étendant tous deux perpendiculairement à la direction longitudinale 15, est formé par un troisième segment 34, reliant le premier segment 32 au premier point de connexion 27, ainsi qu'un quatrième segment 35, reliant le premier segment 32 et le deuxième segment 33 et destiné à être disposé à proximité du connecteur 4.

Il en va de même pour les segments formés sur la deuxième portion 12, la piste résistive étant formée par un couple de cinquième et sixième segments 36 et 37, et un autre couple de septième et huitième segments référencés 38 et 39. La disposition des cinquième, sixième, septième et huitième segments est identique à celle des premier, deuxième, troisième et quatrième segments telle que présentée ci-dessus. Un segment de liaison 40 chemine sur le premier pont 17 pour relier le deuxième segment 33 avec le cinquième segment 36.

Dans l'exemple des figures 3 et 4, la piste résistive du moyen de chauffage 13 se termine au niveau des extrémités référencées 21 et 24, sans chevaucher celles-ci.

Selon une variante de l'invention non représentée, au moins une des ces extrémités, et avantageusement les deux extrémités 21 et 24 comprennent un logement ménagé dans la zone 42 et fermé par la paroi de l'interface hydraulique, au niveau de ces extrémités. Ce logement s'étend ainsi sur la longueur de l'extrémité 21 ou 24. La piste résistive peut alors s'étendre dans ce logement de manière à dissiper des calories jusqu'à l'extrémité de l'interface hydraulique enfilée dans le connecteur du balai d'essuyage. On augmente ainsi la surface chauffée et on réduit le risque de voir le liquide de lavage gelé. Ce logement forme également un cache qui protège le bout de la piste résistive, bien que l'extrémité soit enfilée dans le connecteur.

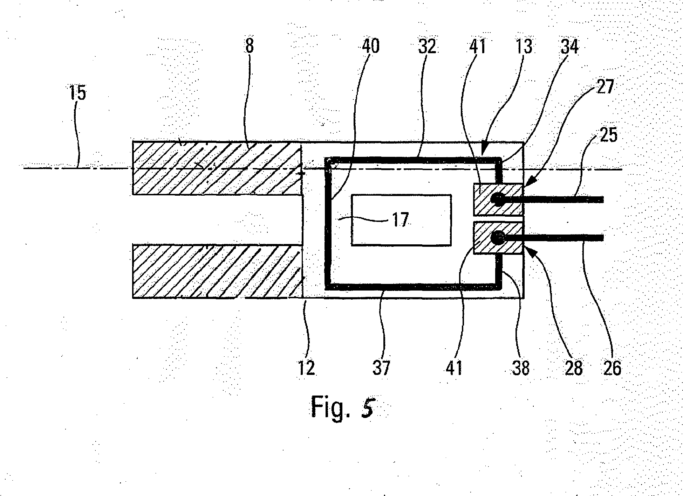

Selon autre variante représentée à la figure 5, le cheminement du moyen de chauffage peut être simplifié de manière à ne pas s'étendre aux niveaux des extrémités 21 et 24. Ainsi, le moyen de chauffage 13 peut s'arrêter au droit du premier pont 17. Le moyen de chauffage 13 comprend alors cinq segments, deux segments 32 et 37 cheminant chacun respectivement sur la première portion 8 et sur la deuxième portion 12, un troisième segment 40 cheminant sur le premier pont 17 et reliant le premier segment 32 au deuxième segment 37, et un quatrième et un cinquième segments 34 et 38 reliant respectivement le premier segment 32 au premier point de connexion 27 et le deuxième segment 37 et deuxième point de connexion 28.

L'interface hydraulique 7 selon l'invention est fabriquée à partir d'un matériau polymérique, par exemple par moulage. On notera tout particulièrement que la première portion 8, la deuxième portion 12, la troisième portion 20, la quatrième portion 22, le premier pont 17 et le deuxième pont 18 forment une seule et unique pièce, réalisée selon une même opération de moulage, avantageusement à partir d'un même matériau polymérique.

L'ensemble formé par le tube d'alimentation 6 en liquide, les deux câbles 25 et 26 formant source d'énergie électrique et l'interface hydraulique 7 selon l'invention présentée ci-dessus, forme au moins une partie d'un système d'approvisionnement et/ou de distribution en liquide d'une installation d'essuyage pour véhicule automobile.

De manière avantageuse, les deux câbles 25 et 26 sont noyés dans la matière constitutive du tube d'alimentation 6. Ils s'étendent avantageusement entre les deux conduits formés dans le tube d'alimentation 6.

Le raccordement électrique entre le brin conducteur d'un câble et son point de connexion respectif est protégé des agressions extérieures par un dispositif de protection 41, qui couvre le point de connexion à l'endroit où le brin est soudé. A titre d'exemple, un tel dispositif de protection 41 prend la forme d'un plot en contact avec le point de connexion électrique et qui recouvre une extrémité du brin conducteur solidarisé au point de connexion électrique. Un tel plot est par exemple réalisé par une goutte de résine thermodurcissable déposée sur le point de connexion.

En variante, le moyen de chauffage 13 solidarisé à l'interface hydraulique 7 peut être constitué par au moins un des câbles 25, 26 solidaires du tube d'alimentation 6. Un tel moyen de chauffage peut être mis en oeuvre pour chaque mode de réalisation décrit ci-dessus. Un tel moyen de chauffage présente l'avantage d'éviter le raccordement entre les câbles issus dudit tube et une piste résistive rapportée sur l'interface hydraulique 7.

## Revendications

1. Interface hydraulique (7) apte à être installée entre un tube d'alimentation (6) en liquide et un connecteur (4) d'un dispositif d'essuyage d'une vitre d'un véhicule, comprenant au moins une première portion (8) apte à canaliser le liquide et un moyen de chauffage (13) apte à être alimenté électriquement, **caractérisée en ce que** le moyen de chauffage (13) est solidarisé au moins sur une face extérieure (11) de la première portion (8).

2. Interface selon la revendication 1, dans laquelle une cavité (14) est ménagée dans la face extérieure (11), le moyen de chauffage (13) étant disposé dans ladite cavité (14).

3. Interface selon la revendication 2, dans laquelle la cavité (14) est délimitée par un fond plat sur lequel le moyen de chauffage (13) adhère

4. Interface selon l'une quelconque des revendications précédentes, dans laquelle la première portion (8) s'étend selon une direction longitudinale (15) correspondant à une direction le long de laquelle le liquide est apte à se déplacer dans la première portion (8), ledit moyen de chauffage (13) s'étendant selon un axe longitudinal parallèle à la direction longitudinale (15).

5. Interface selon l'une quelconque des revendications précédentes, comprenant une deuxième portion (12) apte à canaliser le liquide, séparée de la première portion (8) et reliée à cette dernière par un premier pont (17), ledit moyen de chauffage (13) étant disposé à la fois sur la première portion (8) et sur la deuxième portion (12).

6. Interface selon la revendication 5, dans laquelle le moyen de chauffage (13) chemine sur le premier pont (17).

7. Interface selon l'une quelconque des revendications 5 à 6, dans laquelle le moyen de chauffage comprend au moins deux segments parallèles (32-33, 34-35, 36-37, 38-39) disposés sur chaque portion apte à canaliser le liquide.

8. Interface selon la revendication 6, dans laquelle le moyen de chauffage comprend un premier segment (32) cheminant sur la première portion (8) et un deuxième segment (37) cheminant sur la deuxième portion (12), lesdites extrémités du premier segment (32) et du deuxième segment (37) s'étendant jusqu'au droit du premier pont (17) et étant relié entre elles par un troisième segment (40) cheminant sur ledit premier pont (17).

9. Interface selon l'une quelconque des revendications 5 à 8, dans laquelle le moyen de chauffage (13) comprend aux moins deux points de connexion électrique (27, 28) destinés à être raccordés à une source électrique, ledit moyen de chauffage étant de préférence une piste résistive (16).

10. Interface selon la revendication 9, dans laquelle est prévu un deuxième pont (18) reliant la première portion (8) à la deuxième portion (12), lesdits points de connexion électrique (27, 28) étant disposés sur le deuxième pont (18).

11. Interface selon l'une quelconque des revendications 1 à 8, dans laquelle le moyen de chauffage (13) comprend au moins un câble d'alimentation électrique solidaire du tube d'alimentation (6).

12. Interface selon l'une quelconque des revendications précédentes, comprenant un moyen de solidarisation (29) apte à maintenir l'interface hydraulique (7) sur le connecteur (4).

13. Système d'approvisionnement et/ou de distribution en liquide d'une installation d'essuyage pour véhicule automobile, comprenant au moins un tube d'alimentation (6) en liquide, une source d'énergie électrique du moyen de chauffage (13) d'une interface hydraulique (7) selon l'une quelconque des revendications précédentes.

14. Système selon la revendication 13, dans lequel le moyen de chauffage (13) comprend aux moins deux points de connexion électrique (27, 28), chaque câble étant solidarisé sur un point de connexion électrique raccordé à un câble (25, 26) d'alimentation électrique.

15. Système selon la revendication 14, dans lequel au moins un point de connexion (27, 28) est couvert par un dispositif de protection (41), le dispositif de protection (41) étant de préférence un plot en contact avec le point de connexion électrique (27, 28) et couvrant une extrémité d'un brin conducteur du câble (25, 26) solidarisé au point de connexion électrique (27, 28).

16. Système selon la revendication 13, dans lequel le moyen de chauffage (13) de l'interface hydraulique (7) comprend au moins un câble d'alimentation électrique solidaire du tube d'alimentation (6).

## Patentansprüche

1. Hydraulische Kupplung (7), welche geeignet ist, zwischen einem Flüssigkeitszuführrohr (6) und einem Verbinder (4) einer Wischvorrichtung einer Scheibe eines Fahrzeugs eingebaut zu werden, und mindestens einen ersten Abschnitt (8), der geeignet ist, die Flüssigkeit zu kanalisieren, und ein Heizmittel (13), das geeignet ist, elektrisch gespeist zu werden, aufweist, **dadurch gekennzeichnet, dass** das Heizmittel (13) wenigstens auf einer Außenfläche (11) des ersten Abschnitts (8) fest angebracht ist.

2. Kupplung nach Anspruch 1, wobei in der Außenfläche (11) ein Hohlraum (14) ausgebildet ist, wobei das Heizmittel (13) in dem Hohlraum (14) angeordnet ist.

3. Kupplung nach Anspruch 2, wobei der Hohlraum (14) von einem flachen Boden begrenzt wird, an dem das Heizmittel (13) anhaftet.

4. Kupplung nach einem der vorhergehenden Ansprüche, wobei sich der erste Abschnitt (8) in einer Längsrichtung (15) erstreckt, die einer Richtung entspricht, in der die Flüssigkeit in dem ersten Abschnitt (8) strömen kann, wobei sich das Heizmittel (13) entlang einer zu der Längsrichtung (15) parallelen Längsachse erstreckt.

5. Kupplung nach einem der vorhergehenden Ansprüche, welche einen zweiten Abschnitt (12) aufweist, der geeignet ist, die Flüssigkeit zu kanalisieren, von dem ersten Abschnitt (8) getrennt ist und mit diesem Letzteren durch eine erste Brücke (17) verbunden ist, wobei das Heizmittel (13) gleichzeitig auf dem ersten Abschnitt (8) und auf dem zweiten Abschnitt (12) angeordnet ist.

6. Kupplung nach Anspruch 5, wobei das Heizmittel (13) auf der ersten Brücke (17) verläuft.

7. Kupplung nach einem der Ansprüche 5 bis 6, wobei das Heizmittel mindestens zwei parallele Segmente (32-33, 34-35, 36-37, 38-39) aufweist, die auf jedem Abschnitt angeordnet sind, der geeignet ist, die Flüssigkeit zu kanalisieren.

8. Kupplung nach Anspruch 6, wobei das Heizmittel ein erstes Segment (32), das auf dem ersten Abschnitt (8) verläuft, und ein zweites Segment (37), das auf dem zweiten Abschnitt (12) verläuft, aufweist, wobei sich die Enden des ersten Segments (32) und des zweiten Segments (37) bis zu dem Ort der ersten Brücke (17) erstrecken und durch ein drittes Segment (40), das auf der ersten Brücke (17) verläuft, miteinander verbunden sind.

9. Kupplung nach einem der Ansprüche 5 bis 8, wobei das Heizmittel (13) mindestens zwei elektrische Anschlusspunkte (27, 28) aufweist, die dazu bestimmt sind, an eine Stromquelle angeschlossen zu werden, wobei das Heizmittel vorzugsweise eine Widerstandsbahn (16) ist.

10. Kupplung nach Anspruch 9, wobei eine zweite Brücke (18) vorgesehen ist, welche den ersten Abschnitt (8) mit dem zweiten Abschnitt (12) verbindet, wobei die elektrischen Anschlusspunkte (27, 28) auf der zweiten Brücke (18) angeordnet sind.

11. Kupplung nach einem der Ansprüche 1 bis 8, wobei das Heizmittel (13) mindestens ein elektrisches Speisekabel aufweist, das mit dem Zuführrohr (6) fest verbunden ist.

12. Kupplung nach einem der vorhergehenden Ansprüche, welche ein Befestigungsmittel (29) aufweist, das geeignet ist, die hydraulische Kupplung (7) an dem Verbinder (4) zu halten.

13. Flüssigkeitsversorgungs- und/oder -verteilungssystem einer Wischanlage für ein Kraftfahrzeug, welche mindestens ein Flüssigkeitszuführrohr (6) und eine elektrische Energiequelle des Heizmittels (13) einer hydraulischen Kupplung (7) nach einem der vorhergehenden Ansprüche aufweist.

14. System nach Anspruch 13, wobei das Heizmittel (13) mindestens zwei elektrische Anschlusspunkte (27, 28) aufweist, wobei jedes Kabel an einem elektrischen Anschlusspunkt befestigt ist, der an ein elektrisches Speisekabel (25, 26) angeschlossen ist.

15. System nach Anspruch 14, wobei mindestens ein Anschlusspunkt (27, 28) von einer Schutzvorrichtung (41) bedeckt ist, wobei die Schutzvorrichtung (41) vorzugsweise ein Kontaktstück ist, das sich mit dem elektrischen Anschlusspunkt (27, 28) in Kontakt befindet und ein Ende einer Leitungsader des Kabels (25, 26) bedeckt, das mit dem elektrischen Anschlusspunkt (27, 28) fest verbunden ist.

16. System nach Anspruch 13, wobei das Heizmittel (13) der hydraulischen Kupplung (7) mindestens ein elektrisches Speisekabel aufweist, das mit dem Zuführrohr (6) fest verbunden ist.

## Claims

1. Hydraulic interface (7) able to be installed between a liquid supply tube (6) and a connector (4) of a device for wiping a window of a vehicle, comprising at least one first portion (8) able to channel the liquid and a heating means (13) able to be supplied electrically, **characterized in that** the heating means (13) is fastened at least on an exterior face (11) of the first portion (8).

2. Interface according to Claim 1, in which a cavity (14) is made in the exterior face (11), the heating means (13) being arranged in the said cavity (14).

3. Interface according to Claim 2, in which the cavity (14) is delimited by a flat bottom to which the heating means (13) adheres.

4. Interface according to any one of the preceding claims, in which the first portion (8) extends in a longitudinal direction (15) corresponding to a direction along which the liquid is able to move in the first portion (8), the said heating means (13) extending along a longitudinal axis parallel to the longitudinal direction (15).

5. Interface according to any one of the preceding claims, comprising a second portion (12) able to channel the liquid, separated from the first portion (8) and joined to the latter by a first bridge (17), the said heating means (13) being arranged both on the first portion (8) and on the second portion (12).

6. Interface according to Claim 5, in which the heating means (13) runs over the first bridge (17).

7. Interface according to either one of Claims 5 and 6, in which the heating means comprises at least two parallel segments (32-33, 34-35, 36-37, 38-39) arranged on each portion able to channel the liquid.

8. Interface according to Claim 6, in which the heating means comprises a first segment (32) running over the first portion (8) and a second segment (37) running over the second portion (12), the said ends of the first segment (32) and of the second segment (37) extending as far as opposite the first bridge (17) and being joined together by a third segment (40) running over the said first bridge (17).

9. Interface according to any one of Claims 5 to 8, in which the heating means (13) comprises at least two electrical connection points (27, 28) intended to be connected to an electrical source, the said heating means preferably being a resistive track (16).

10. Interface according to Claim 9, in which there is provided a second bridge (18) joining the first portion (8) to the second portion (12), the said electrical connection points (27, 28) being arranged on the second bridge (18).

11. Interface according to any one of Claims 1 to 8, in which the heating means (13) comprises at least one electrical supply cable secured to the supply tube (6).

12. Interface according to any one of the preceding claims, comprising a fastening means (29) able to hold the hydraulic interface (7) on the connector (4).

13. System for feeding and/or distributing liquid for a wiping installation for automotive vehicle, comprising at least one liquid supply tube (6), an electrical energy source for the heating means (13) for a hydraulic interface (7) according to any one of the preceding claims.

14. System according to Claim 13, in which the heating means (13) comprises at least two electrical connection points (27, 28), each cable being fastened to an electrical connection point connected to an electrical supply cable (25, 26).

15. System according to Claim 14, in which at least one connection point (27, 28) is covered by a protection device (41), the protection device (41) preferably being a pad in contact with the electrical connection point (27, 28) and covering an end of a conducting strand of the cable (25, 26) fastened to the electrical connection point (27, 28).

16. System according to Claim 13, in which the means (13) for heating the hydraulic interface (7) comprises at least one electrical supply cable secured to the supply tube (6).
